# EUROPEAN PATENT APPLICATION

(11) **EP 4 464 524 A1**
(43) Date of publication of application: **20.11.2024**
(21) Application number: 24176335.8
(22) Date of filing: 16.05.2024
(51) Int. Cl.: B60G 3/14, B60G 17/06, B60G 17/08, B60G 21/073

(54) **VEHICLE SUSPENSION**

(30) Priority: 19.05.2023 JP 2023082781
(71) Applicant: Tsubakimoto Chain Co., Osaka 530-0005 (JP)
(72) Inventor: SAITO, Yusuke, Osaka, 530-0005 (JP)
(74) Representative: dompatent von Kreisler Selting Werner - Partnerschaft von Patent- und Rechtsanwälten mbB

(57) **Abstract**

To provide a running unit that can reduce production costs and maintenance frequency, mitigate external adverse effects such as impact or entanglement of a foreign matter, and allow greater flexibility in equipment layout, with a simple structure. The running unit includes a main body, a pair of left and right pivot arms provided pivotably about a pivot shaft, wheels provided to the pivot arms, and shock absorbers. The shock absorbers contain a fluid inside, and are provided corresponding to the pair of left and right pivot arms. Each of the shock absorbers is connected at one end thereof to the main body and connected at the other end thereof to each of the left and right pivot arms. A communicating tube is connected to the shock absorbers to allow fluid communication between respective interiors thereof.

## Description

### BACKGROUND OF THE INVENTION

### 1. Field of the Invention

The present invention relates to a running unit that includes a main body, a pair of left and right pivot arms provided pivotably about a pivot shaft relative to the main body, wheels provided to the pivot arms respectively, and a shock absorber provided to each of the pivot arms.

### 2. Description of the Related Art

A running unit with a main body, a pair of left and right pivot arms provided pivotably about a pivot shaft relative to the main body, and wheels provided to the pivot arms respectively has been known, for example, from Japanese Patent No. 4567813.

Japanese Patent No. 4567813 describes a multi-wheel vehicle 1 with a running unit, which includes a main body (frame 2), a pair of left and right pivot arms (swing arms 4L and 4R) provided pivotably about a pivot shaft (support shaft part 3A) relative to the main body (frame 2), and wheels (5L and 5R) provided to the pivot arms (swing arms 4L and 4R) respectively. The pivot shaft (support shaft part 3A) is provided with substantially fan-shaped tilting members 17L and 17R, whose arcuate portions 21 are each connected, by a string member 20, to a direction-changing member 19 in the form of a balance or a pulley.

The tilting members 17L and 17R are thus linked, so that, when one of the wheels (5L and 5R) receives a force from a road surface and is pushed up via the pivot shaft (support shaft part 3A) and pivot arms (4L and 4R), the other one of the wheels (5L and 5R) can be pushed down toward the road surface. When the vehicle makes a turn or changes directions, or when running on a laterally inclined road surface, the wheels (5L and 5R) can be tilted flexibly together with the vehicle body, while the ground pressure of the wheels (5L and 5R) is maintained uniform.

### SUMMARY OF THE INVENTION

The known running unit according to Japanese Patent No. 4567813 still has some scope of improvement.

Namely, the running unit according to, for example, Japanese Patent No. 4567813 is configured to link the pair of left and right wheels via the direction-changing member, tilting members, and string member. This is a complex structure with many drive parts, which can cause an increase in production cost as well as in the frequency of maintenance such as grease replenishment.

Moreover, the direction-changing member, tilting members, and string member are exposed in this configuration, so that these parts are susceptible to direct external impact, or prone to malfunctions due to entanglement of a foreign matter.

The left and right wheels are linked by connecting, by a string member, the direction-changing member in the form of a balance or pulley and the left and right tilting members. This configuration requires the direction-changing member and tilting members to have a certain size and to be spaced a certain distance apart, which compromises the flexibility in equipment layout.

The present invention solves these problems, and the object thereof is to provide a running unit that can reduce production costs and maintenance frequency, mitigate external adverse effects such as impact or entanglement of a foreign matter, and allow greater flexibility in equipment layout, with a simple structure.

The running unit according to the present invention includes a main body, a pair of left and right pivot arms provided pivotably about a pivot shaft relative to the main body, wheels provided to the pivot arms respectively, and shock absorbers provided to the pivot arms. The shock absorbers contain a fluid inside. Each of the shock absorbers is provided to each of the pair of left and right pivot arms. Each of the shock absorbers is connected at one end thereof to the main body and connected at the other end thereof to each of the pair of left and right pivot arms. The running unit further includes a communicating tube connected to the left and right shock absorbers and allowing fluid communication between respective interiors thereof. The above object is thereby achieved.

In the running unit according to claim 1, shock absorbers are provided corresponding to the pivot arms, each of the shock absorbers being connected at one end thereof to the main body, and connected at the other end thereof to each of the pair of left and right pivot arms. The shock absorbers contain a fluid inside. A communicating tube is provided for allowing fluid communication between respective interiors of the left and right shock absorbers. When the vehicle body tilts in the left and right direction, or when only one of the wheels swings upward depending on the road surface condition, the fluid inside one shock absorber is compressed by the pivoting movement of the pivot arm, and moves from the one shock absorber to the other through the communicating tube. This causes the other shock absorber to extend, which in turn causes the other pivot arm to swing the other wheel downward.

When, conversely, the other wheel alone swings upward, the fluid inside the shock absorbers enables the coordinated movement through the communicating tube to swing the one wheel downward.

Thus the fluid movement inside the shock absorbers allows the pair of left and right wheels to change their height in accordance with the tilt in the left and right direction of the vehicle body, or the irregularities or slope of the road surface, so that the left and right wheels both reliably stay on the ground, which improves the running stability.

The structure is simple, with only a communicating tube connected to allow fluid communication between the pair of left and right shock absorbers, so that the number of components is reduced, and production cost increases can be minimized. The simple structure also offers greater flexibility in equipment layout.

The unit has fewer drive parts and does not require oil or grease replenishment, and therefore the maintenance frequency can be reduced.

According to the configuration set forth in claim 2, a valve is provided in a middle portion of the communicating tube to allow adjustment of the amount of fluid movement. The flow rate of the fluid inside the communicating tube can readily be controlled by a user only operating the valve, to adjust the balance of the coordinated movements of the pair of left and right wheels as desired.

According to the configuration set forth in claim 3, a tank capable of storing fluid is provided in a middle portion of the communicating tube so as to be in communication with the communicating tube. This allows sufficient fluid capacity to be secured according to the size of the vehicle, which helps to maintain a stable balance of the coordinated movements of the pair of left and right wheels.

According to the configuration set forth in claim 4, an orifice is provided inside the communicating tube. The orifice facilitates control of the flow of the fluid in the communicating tube.

The orifice allows the running unit to be configured with a simple design without using an electromagnetic valve or the like, and helps to minimize cost increases.

According to the configuration set forth in claim 5, the fluid inside the shock absorbers is air. This helps to reduce the overall weight of the equipment as compared to a liquid such as oil.

The compressibility of air is used not only for the coordinated movements, but also for the running unit to serve as a suspension for the entire equipment. Basic pressure adjustment can be easily achieved by introducing air into the shock absorbers or letting out the air, which allows the user to readily adjust the vehicle height or the balance of the coordinated movements of the pair of left and right wheels.

### BRIEF DESCRIPTION OF THE DRAWINGS

FIG. 1 is a perspective view of a running unit 100 according to one embodiment of the present invention;
FIG. 2 is a top plan view of the running unit 100 according to one embodiment of the present invention;
FIG. 3 is a front view of the running unit 100 according to one embodiment of the present invention;
FIG. 4 is a side view of the running unit 100 according to one embodiment of the present invention;
FIG. 5 is a side view of the running unit 100 according to one embodiment of the present invention, with a first wheel 125a swinging upward;

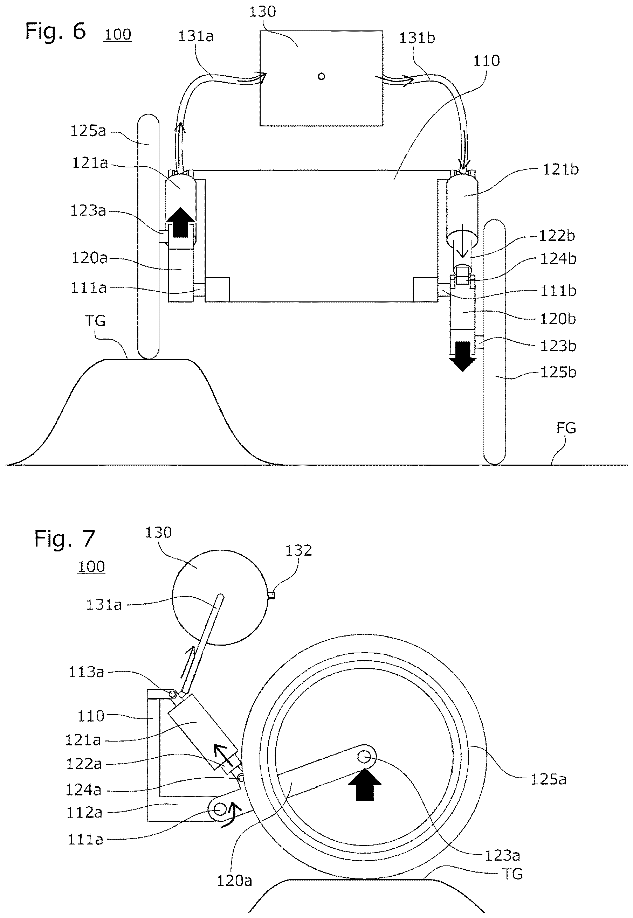

FIG. 6 is a front view of the running unit 100 according to one embodiment of the present invention, with the first wheel 125a swinging upward;
FIG. 7 is a side view illustrating the first wheel 125a side of the running unit 100 according to one embodiment of the present invention, when the first wheel 125a swings upward; and
FIG. 8 is a side view illustrating the second wheel 125b side of the running unit 100 according to one embodiment of the present invention, when the first wheel 125a swings upward.

### DESCRIPTION OF THE PREFERRED EMBODIMENTS

A running unit 100 according to one embodiment of the present invention is described below with reference to the drawings.

The running unit 100 is to be mounted to a running vehicle, with left and right wheels 125 serving as rear wheels. For convenience of explanation, other configurations than the running unit 100 are not shown.

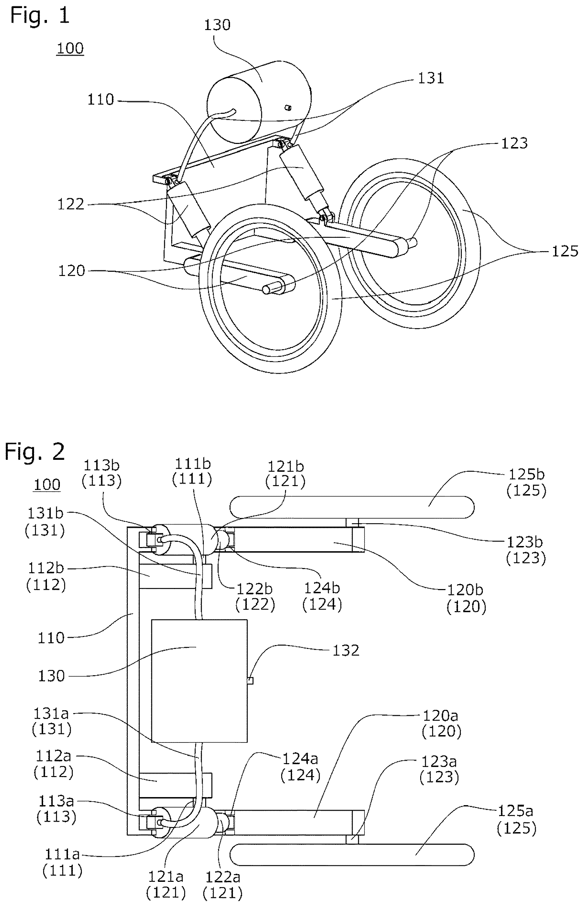

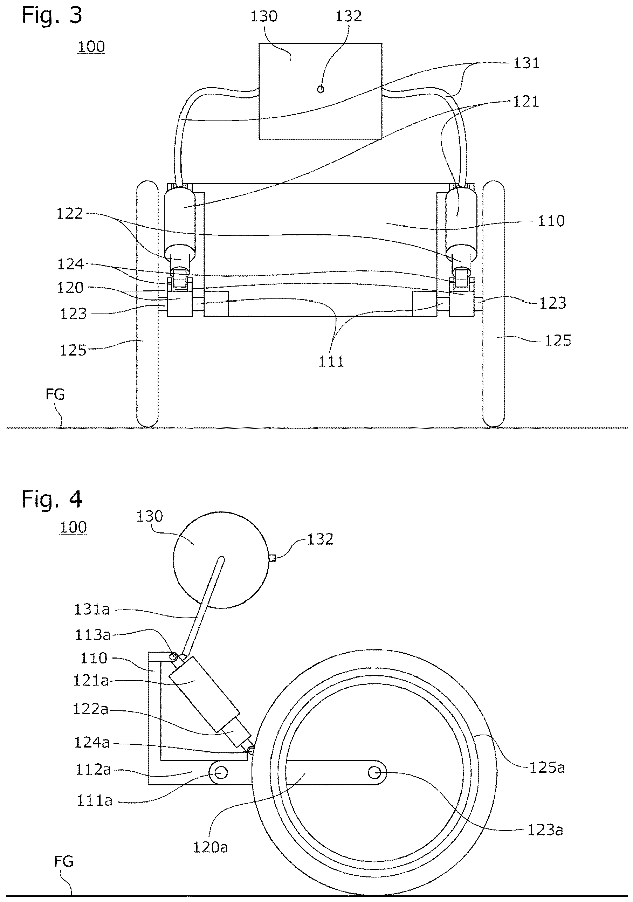

The running unit 100 according to one embodiment of the present invention includes, as shown in FIG. 1 to FIG. 4, a main body 110, a pair of left and right pivot arms 120 (first pivot arm 120a and second pivot arm 120b) pivotable about pivot shafts 111 (first pivot shaft 111a and second pivot shaft 111b) relative to the main body 110, wheels 125 (first wheel 125a and second wheel 125b) provided to the respective pivot arms 120, and shock absorbers 121 (first shock absorber 121a and second shock absorber 121b) provided between the main body 110 and the pivot arms 120.

The pivot arms 120 are connected at one end to connection arms 112 (first connection arm 112a and second connection arm 112b) of the main body 110 such as to be pivotable about the pivot shafts 111.

The pivot arms 120 are connected at the other end to the wheels 125 (first wheel 125a and second wheel 125b) such as to allow the wheels to rotate about rotating shafts 123 (first rotating shaft 123a and second rotating shaft 123b).

The shock absorbers 121 each have a cylinder 122 (first cylinder 122a or second cylinder 122b) that can reciprocate therein. The shock absorbers 121 are connected to the main body 110 such as to be pivotable about support shafts 113 (113a and 113b), and connected to the pivot arms 120 via the cylinders 122 such as to be pivotable about cylinder connection shafts 124 (first cylinder connection shaft 124a and second cylinder connection shaft 124b).

The shock absorbers 121 contain air as a fluid therein, and are provided with communicating tubes 131 (first communicating tube 131a and second communicating tube 131b) that allow the air to pass through one end thereof into and out of the shock absorbers 121.

At the other end, the communicating tubes 131 are in communication with a regulation tank 130 that can store air. A valve 132 is provided to the regulation tank 130 to allow adjustment of the amount and pressure of the air inside the regulation tank 130.

The cylinders 122 are configured to be movable back and forth by a pivoting movement of the pivot arms 120 or a change in the air pressure inside the shock absorbers 121.

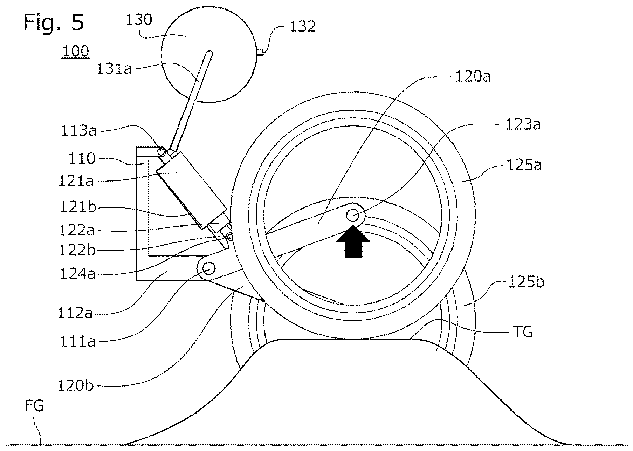

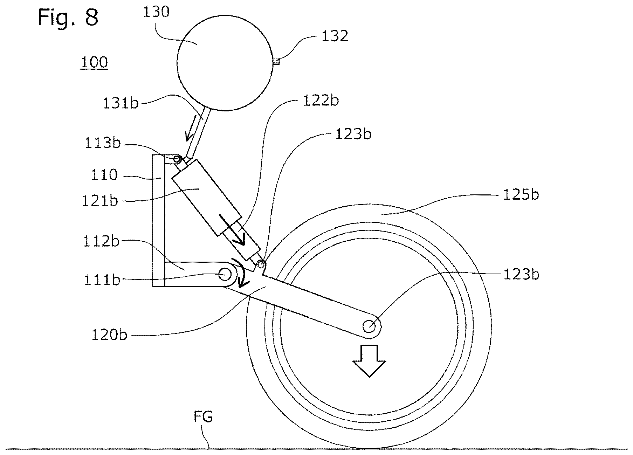

Next, how the first wheel 125a and second wheel 125b are linked in the running unit 100 according to one embodiment of the present invention is described with reference to FIG. 5 and FIG. 8.

When the first wheel 125a of the running unit 100 running on a flat surface FG rides up onto a raised surface TG, the first pivot arm 120a swings upward about the first pivot shaft 111a.

This upward movement of the first pivot arm 120a pushes the first cylinder 122a toward the first shock absorber 121a.

The air inside the first shock absorber 121a is pressed by the first cylinder 122a so that the pressure inside the first shock absorber 121a rises. However, since the first shock absorber 121a and second shock absorber 121b are in communication with each other via the regulation tank 130 and communicating tubes 131, the air flows to make the internal pressure uniform throughout the first shock absorber 121a and second shock absorber 121b.

The internal pressure of the second shock absorber 121b at this time becomes higher than before the first wheel 125a rode up onto the step, so that the second cylinder 122b is pushed out of the second shock absorber 121b, turning the second pivot arm 120b about the second pivot shaft 111b to the opposite direction from the swinging direction of the first wheel 125a, i.e., downward, to make contact with the flat surface FG.

As the running unit further moves and the first wheel 125a comes from the top of the raised surface TG down to the flat surface FG, the force that swings the first wheel 125a upward is lost, so that the first cylinder 122a moves out of the first shock absorber 121a by the weight of the first wheel 125a and the internal pressure of the first shock absorber 121a.

The first wheel 125a thus swings downward with the first pivot arm 120a. At the same time, the second wheel 125b, while maintaining contact with the ground, swings upward with the second pivot arm 120b as viewed from the second pivot shaft 111b, so that the left and right wheels 125 make contact with the flat surface FG with their rotating shafts 123 (first rotating shaft 123a and second rotating shaft 123b) being positioned on a straight line.

The left and right wheels 125 are configured to swing in opposite directions from each other in this way, so that, even when one wheel 125 rides up onto a step or the like, the other wheel 125 can stay on the ground, without causing the main body 110 to tilt largely. Thus the running stability can be improved.

Needless to say, the coordinated movements of the first wheel 125a and second wheel 125b happen not only when the first wheel 125a swings upward. When the second wheel 125b alone swings upward, the first wheel 125a swings downward by the reciprocating movements of the cylinders 122 caused by a change in the air pressure.

Also, when the running vehicle turns a curve, for example, and the vehicle body tilts, the first wheel 125a and second wheel 125b can both stay on the ground, and thus the running stability can be improved.

The moving speed of the air can be changed by varying the amount of air or the pressure of air inside the shock absorbers 121 and/or the regulation tank 130, the inside diameter and/or length of the communicating tubes 131, and the presence or absence of an orifice. The balance of the coordinated movements of the first wheel 125a and second wheel 125b can thus be easily changed.

In particular, the valve 132 is provided to the regulation tank 130, so that a user can operate the valve 132 in accordance with the weight or load weight of the running vehicle or other running conditions, to readily adjust the vehicle height, or to achieve a desired balance of the coordinated movements of the first wheel 125a and second wheel 125b.

Moreover, the shock absorbers 121 that use the compressibility of air also serve as a suspension. Therefore, vibration of the running vehicle can be suppressed in the case where the vehicle runs on a road surface with fine continuous irregularities, for example.

The left and right shock absorbers 121 are in communication with each other via the regulation tank 130 and communicating tubes 131. The structure is simple and uses a fewer number of components, which helps to minimize cost increases. The unit has fewer exposed movable parts so that it is less prone to foreign matter entanglement, and requires no oil or grease replenishment. The maintenance frequency can thus be reduced.

The regulation tank 130 connected to the shock absorbers 121 via the communicating tubes 131 need not necessarily be located in a central part of the running unit 100. Therefore, the unit has greater design and layout flexibility.

Since the shock absorbers 121, regulation tank 130, and communicating tubes 131 are filled with air, the weight of the entire running unit 100 can be reduced.

The running unit 100 according to one embodiment of the present invention can be used not only for an automobile with an engine, but also for various types of vehicles that run on wheels, such as human-powered bicycles or cargo-carrying carts.

While one embodiment of the present invention has been described in detail, the present invention is not limited to the embodiment described above and may be carried out with various design changes without departing from the scope of the present invention set forth in the claims.

While the shock absorbers, regulation tank, and communicating tubes are filled with air in the embodiment described above, the fluid inside the shock absorbers, regulation tank, and communicating tubes is not limited to air. Other gases such as helium or nitrogen, or liquids such as water or oil may also be used.

While the left and right shock absorbers are connected via the communicating tubes and regulation tank in the embodiment described above, the left and right shock absorbers may be connected in different manners, such as without the regulation tank.

While a valve is provided to the regulation tank in the embodiment described above, this configuration is not limiting. The regulation tank may be omitted, for example, or the valve may be provided to the shock absorber(s), or the communicating tube(s).

While the wheels of the running unit can serve as rear wheels of a running vehicle as described in the embodiment above, this configuration is not limiting. For example, the running unit may be attached to a running vehicle such as to function as front wheels.

## Claims

1. A running unit comprising:
a main body;
a pair of left and right pivot arms provided pivotably about a pivot shaft relative to the main body;
wheels provided to the pivot arms respectively; and
shock absorbers provided to the pivot arms,
the shock absorbers containing a fluid inside, each of the shock absorbers being provided to each of the pair of left and right pivot arms, and each of the shock absorbers being connected at one end thereof to the main body and connected at another end thereof to each of the pair of left and right pivot arms,
the running unit further comprising a communicating tube connected to the left and right shock absorbers and allowing fluid communication between respective interiors thereof.

2. The running unit according to claim 1, wherein a valve is provided in a middle portion of the communicating tube to allow adjustment of an amount of fluid movement.

3. The running unit according to claim 1, wherein a tank capable of storing fluid is provided in a middle portion of the communicating tube so as to be in communication with the communicating tube.

4. The running unit according to claim 1, wherein an orifice is provided inside the communicating tube.

5. The running unit according to claim 1, wherein the fluid is air.

6. A running vehicle comprising a main body, a front wheel, and a rear wheel, at least one of the front wheel and the rear wheel being configured with the running unit according to any one of claims 1 to 5.
